# EUROPÄISCHE PATENTSCHRIFT

(11) **EP 1 588 900 B1**
(45) Veröffentlichungstag und Bekanntmachung des Hinweises auf die Patenterteilung: **09.05.2007**
(21) Anmeldenummer: 05003014.7
(22) Anmeldetag: 12.02.2005
(51) Int. Cl.: B60R 16/02

(54) **Vorrichtung zum Auslesen von Sensoren im Motorraum eines Kraftfahrzeuges**
Device for reading sensors in the engine compartment of a motor vehicle
Disposif de lecture pour des capteurs dans le compartiment moteur d'un véhicule automobile

(30) Priorität: 22.04.2004 DE 102004019572
(43) Veröffentlichungstag der Anmeldung: 26.10.2005
(73) Patentinhaber: Hella KGaA Hueck & Co., 59552 Lippstadt (DE)
(72) Erfinder: Niemann, Thomas, Dipl.-Ing., 27753 Delmenhorst (DE)
(74) Vertreter: Siekmann, Gunnar

(56) Entgegenhaltungen:
- EP-A- 0 563 713
- EP-A- 1 022 548
- WO-A-01/44758
- WO-A-01/84090
- WO-A-03/042573

## Beschreibung

Die Erfindung betrifft eine Vorrichtung zum Auslesen von Sensoren im Motorraum eines Kraftfahrzeuges.

Im Motorraum eines Kraftfahrzeuges sind üblicherweise eine Vielzahl von Sensoren, insbesondere auch Sensoren zur Feststellung verschiedener Komponenten und Niveaustände vorgesehen. Insbesondere sind Sensoren zur Niveauermittlung von Flüssigkeiten, zum Beispiel Kraftstoff, bekannt. In der Regel wird das Niveau bzw. der Füllstand der jeweiligen Flüssigkeiten gemessen. Es ist auch bekannt, für einige dieser Flüssigkeiten eine Zustandsmessung durchzuführen. Die von den jeweiligen Sensoren erhaltenen Daten werden dabei in der Regel über Kabelleitungen zu zentralen oder dezentralen Recheneinheiten weitergeleitet.

Der Erfindung liegt die Aufgabe zugrunde, eine Vorrichtung der eingangs genannten Art zu schaffen, mit der Sensoren im Motorraum eines Kraftfahrzeuges besonders einfach ausgelesen werden können.

Die Lösung dieser Aufgabe erfolgt mit einer Vorrichtung mit den Merkmalen des Patentanspruchs 1. Vorteilhafte Weiterbildungen der Erfindung sind in den Unteransprüchen beschrieben. Das Dokument EP 1022548 A beschreibt eine Vorrichtung mit den Merkmalen das Oberbegriffs des Patentanspruchs 1.

Bei einer Vorrichtung zum Auslesen von Sensoren in einem Kraftfahrzeug, bei dem jedem auszulesenden Sensor ein Transponder zugeordnet ist, insbesondere einen Transponder aufweist, das Kraftfahrzeug eine zur Energieübertragung vorgesehene Spule aufweist und das Kraftfahrzeug für die auszulesenden Sensoren eine Leseantenne aufweist, ist erfindungsgemäß vorgesehen, daß an der Motorhaube, insbesondere an der Unterseite der Motorhaube, eine zur Energieübertragung vorgesehene Spule, insbesondere zentral oder symmetrisch, angeordnet ist und an der Motorhaube bzw. an der Unterseite der Motorhaube für die auszulesenden Sensoren eine Leseantenne angeordnet ist. Mit einer solchen erfindungsgemäßen Vorrichtung, bei der der Sensor als Transponder ausgebildet ist, wird gegenüber konventionellen Niveausystemen eine Gewichtsreduktion, eine vereinfachte Endmontage des Fahrzeuges, eine vereinfachte Demontage des Fahrzeuges, eine größere Designfreiheit, ein erhöhter Servicekomfort und auch insgesamt eine geringere Komponentenzahl und damit geringere Komponentenkosten und eine geringere Zahl von Systemausfällen erreicht. Die Vorrichtung wird bevorzugt als RFID (Radio-Frequency-Identification)-Technik ausgeführt.

Bevorzugt sollen Sensoren im Motorraum eines Kraftfahrzeuges ausgelesen werden. Von besonderer Bedeutung sind die Sensoren im Bereich des Motorraumes. Mit der Erfindung können aber grundsätzlich auch Sensoren erfaßt werden, die außerhalb des Motorraumes angeordnet sind.

Grundsätzlich kann in einer bevorzugten Ausführungsform die im Motorraum zur Energieübertragung vorgesehene Spule identisch mit der Leseantenne zum Auslesen des oder der Sensoren sein. Besonders bevorzugt ist es jedoch, die zur Energieübertragung vorgesehene Spule getrennt von der oder den Leseantennen auszubilden, so daß es sich dabei also um mindestens zwei getrennte Spulen handelt. Besonders bevorzugt ist für jeden im Motorraum angeordneten auszulesenden Sensor eine zugeordnete Leseantenne vorhanden. Die Leseantennen sind bevorzugt als Spulen ausgebildet. Weiterhin sind die Leseantennen günstigerweise jeweils direkt oberhalb des jeweils auszulesenden Sensors angeordnet. Dabei ist die zur Energieübertragung vorgesehene Spule in ihren Abmessungen günstigerweise an die Abmessungen des Motorraumes bzw. insbesondere der Motorhaube angepaßt und damit möglichst groß ausgebildet und kann auf diese Weise eine besonders gute Energieübertragung erzeugen. Die Leseantennen sind bevorzugt innerhalb der zur Energieübertragung vorgesehenen Spule angeordnet. Im Einzelfall können auch aufgrund der speziellen Anordnung einzelner Sensoren auch einzelne oder einige wenige Leseantennen außerhalb der zur Energieübertragung vorgesehenen Spule angeordnet sein. Das von der zur Energieübertragung vorgesehenen Spule ausgesandte Signal dient einmal der Energieübertragung und wird gleichzeitig als Eingangssignal verwendet. Das dann vom Sensor ausgesandte Ausgangssignal wird von der Leseantenne aufgefangen und ausgewertet. In einer anderen Ausführungsform kann auch Energieübertragung und Signalerzeugung und -auswertung völlig voneinander getrennt werden. Dann wird von der Leseantenne sowohl das Eingangssignal an den Transponder ausgesandt, als auch das Ausgangssignal des Transponders empfangen.

In einer bevorzugten Ausführungsform der Erfindung ist in dem Kraftfahrzeug ein zentrales Lesegerät angeordnet, das mit der Spule zur Energieübertragung und einer Leseantenne verbunden ist.

Die Sensoren sind bevorzugt an Schwimmern angeordnet. Auf diese Weise können die Sensoren den Füllstand von verschiedenen Flüssigkeiten sensieren. Dies kann beispielsweise Wischwasser, Kühlflüssigkeit, Servoöl, Bremsflüssigkeit, Motoröl, Batteriesäure, Getriebeöl, Hydrauliköl, Kältemittel und/oder Kraftstoff sein. In einer bevorzugten Ausführungsform der Erfindung führt der Sensor eine direkte Messung des Schwimmerstandes durch. Bei einer solchen direkten Messung wird eine Abstandsmessung zwischen dem Sensor bzw. einem darin angeordneten Transponderchip und der zugeordneten Leseantenne durchgeführt. Das heißt, daß das vom Transponder ausgesendete und von der Leseantenne empfangene Signal auf seine abstandsbedingte Änderung hin ausgewertet wird. In Abhängigkeit von dem verwendeten System kann dies eine Änderung der Schwingung, der Frequenz und/oder der Amplitude sein. In einer anderen bevorzugten Ausführungsform, die auch parallel zur direkten Messung gewählt werden kann, führt der Sensor eine indirekte Messung des Schwimmerstandes durch. Dabei ist in dem Sensor ein Ultraschallsensor oder ein anderer Sensor integriert, der die Schwimmerhöhe zum Boden des flüssigkeitgefüllten Gefäßes mißt und das dabei ermittelte Ergebnis an die Leseantenne überträgt. Dies erfolgt dadurch, daß die Messung des Ultraschallsensors das vom Transponder abgestrahlte Signal verändert. Bevorzugt ist insbesondere eine Änderung der Frequenz. Aber auch Änderungen der Amplitude sind denkbar. Bevorzugt weist jeder Ultraschallsensor eine Sendemembran und eine Empfängermembran auf. Die Ultraschallsensoren sind bevorzugt in Mikrosystemtechnik ausgeführt. Die Empfängermembran ist bevorzugt ring- oder kreisförmig oder wabenförmig ausgebildet und innerhalb einer ringförmigen Sendemembran angeordnet. Insbesondere bei Durchführung beider Meßmethoden kann das Sensorsignal auch zusätzlich hinsichtlich der Qualität des vom Sensorsignals erfaßten Mediums ausgewertet werden. Die Laufzeit innerhalb des Mediums ist neben der zurückzulegenden Strecke auch abhängig von dem Medium selbst bzw. der Qualität des Mediums und läßt daher bei durch direkter Messung bekannter Höhe oder Position des Sensors eine Auswertung hinsichtlich der Qualität des erfaßten Mediums zu. Ergänzend kann der Sensor auch andere Komponenten zur Durchführung von Messungen der Mediumqualität aufweisen.

In einer anderen bevorzugten Weiterentwicklung der Erfindung ist ein Sensor als Ölsensor ausgebildet. Dabei ist dem Ölsensor eine zusätzliche Signalübertragungseinrichtung zugeordnet. Dies insbesondere deshalb, da der Ölsensor typischerweise unterhalb eines Motorblocks angeordnet ist und dadurch eine direkte Erfassung des in dem Ölsensor angeordneten Sensors durch die in der Motorhaube angeordneten Leseantennen nicht möglich ist. Die Signalübertragungseinrichtung ist dabei bevorzugt derart ausgebildet, daß im Motorraum im Bereich der dem Ölsensor zugeordneten, an der Motorhaube angeordneten Leseantenne, eine Spule und eine zweite Leseantenne angeordnet sind und daß die Spule mit einer zweiten Spule im Bereich des Ölsensors verbunden ist. Durch ein solches System erfolgt die drahtlose Übertragung zunächst zwischen den Spulen in der Motorhaube und einem Empfangssystem im oberen Bereich des Motoraums, die Signale werden dann über eine Verbindung zu einer zweiten Spule unterhalb des Motors im Bereich des Ölsensors weitergeleitet. Bevorzugt ist die Verbindung zwischen der ersten Spule und der zweiten Spule über einen Ölpeilstab ausgeführt. Dadurch erhält der Ölpeilstab eine Doppelfunktion. Da bei neueren Ölmeßsystemen bevorzugt der Ölstand im Betrieb gemessen wird, ist durch den hier vorgesehenen Ölpeilstab auch zusätzlich die Messung des Ölstandes im Ruhezustand des Motors weiter möglich und bietet die bekannte Hilfe beim Nachfüllen von Öl.

Nachfolgend wird die Erfindung anhand eines in der Zeichnung dargestellten Ausführungsbeispiels weiter erläutert. Im einzelnen zeigen die schematischen Darstellungen in:
- Fig. 1:: eine perspektivische Ansicht eines Kraftfahrzeuges mit geöffneter Motorhaube;
- Fig. 2:: eine schematische Gesamtansicht der Vorrichtung;
- Fig. 3:: einen Flüssigkeitsbehälter mit einem Sensor;
- Fig. 4:: einen vergrößerten Ausschnitt gemäß Fig. 3; und
- Fig. 5:: eine Prinzipskizze eines in Mikrosystemtechnik aufgebauten Ultraschallsensors.

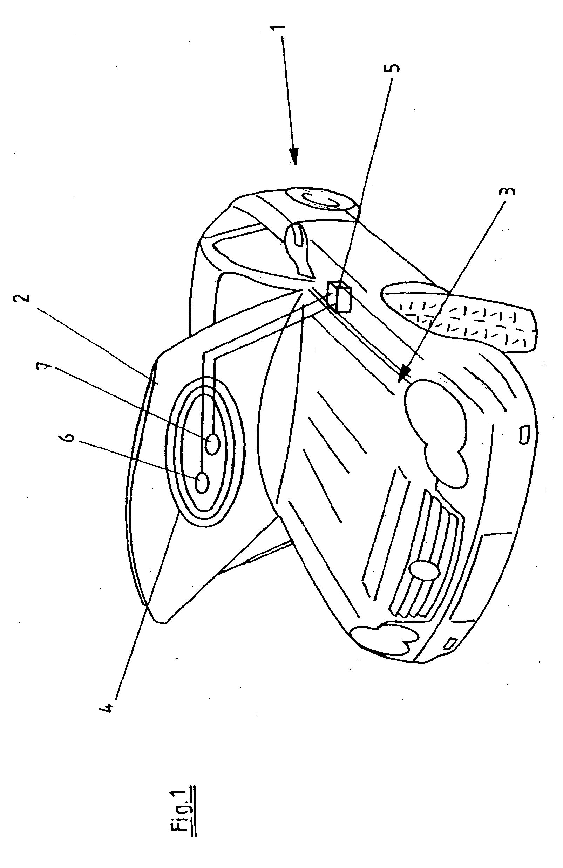

In Fig. 1 ist perspektivisch ein Kraftfahrzeug 1 mit geöffneter Motorhaube 2 dargestellt. In einem Motorraum 3 sind üblicherweise eine Vielzahl von Sensoren vorgesehen, die insbesondere dazu dienen, den Füllstand von verschiedenen Flüssigkeitsbehältern zu kontrollieren. Erfindungsgemäß erfolgt hier eine drahtlose Übertragung der von den Sensoren ermittelten Daten zu einem zentralen Lesegerät 5, das in der Karosserie des Kraftfahrzeuges 1 angeordnet ist. An der Unterseite der Motorhaube 2 sind bevorzugt mit einer Folientechnik eine oder mehrere Spulen oder Antennen angeordnet. Hier ist eine Zentralantenne 4 dargestellt, die vergleichsweise groß ausgebildet ist und auch noch größer ausgebildet sein kann, so daß sie sich nahezu über den gesamten darunterliegenden Motorraum 3 erstreckt. Diese zentrale Antenne oder Energiespule 4 dient der Energieversorgung der im Motorraum 3 angeordneten Sensoren, insbesondere von deren Transponderchips. Innerhalb der zentralen Energiespule 4 sind hier weitere Signalleseantennen 6 und 7 dargestellt, die möglichst direkt über den im Motorraum 3 angeordneten Sensoren plaziert sind. Diese dienen zum Auslesen der von den Sensoren, insbesondere den Transponderchips, ausgesandten Signalen. Die Signalleseantennen 6 und 7 sind ebenfalls mit dem zentralen Lesegerät 5 in Datenverbindung.

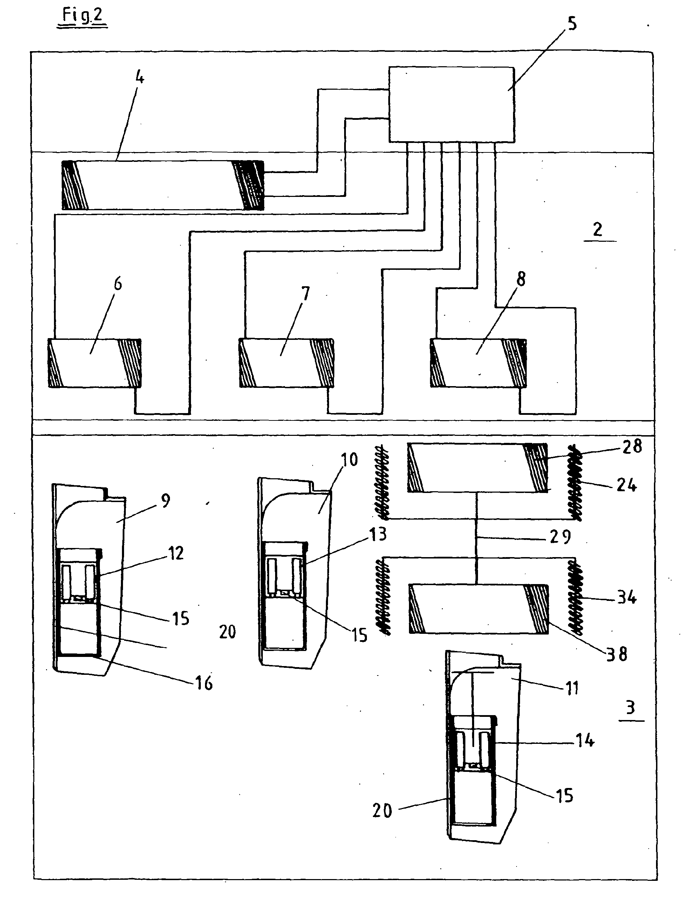

In Fig. 2 ist der Aufbau weiter erläutert. Das zentrale Lesegerät 5 ist in der Karosserie des Kraftfahrzeuges angeordnet. Im Bereich darunter ist die Motorhaube 2 wiedergegeben. Auf der Unterseite der Motorhaube 2 ist die zentrale Energiespule 4 und eine Mehrzahl von Signalleseantennen angeordnet. Hier sind exemplarisch drei Signalleseantennen 6, 7, und 8 dargestellt. Günstigerweise ist jedem auszulesenden Sensor genau eine Signalleseantenne zugeordnet, die möglichst direkt oberhalb dieses Sensors angeordnet ist. Die Signalleseantennen 6, 7 und 8 sind ebenso wie die zentrale Energiespule 4 mit dem zentralen Lesegerät 5 verbunden. Im Motorraum 3 sind mehrere Flüssigkeitsbehälter 9, 10 und 11 schematisch angedeutet, in denen in einer dafür vorgesehenen Vorrichtung 20 jeweils ein Schwimmer 12, 13, 14 entsprechend der Füllstandshöhe in dem jeweiligen Behälter 9, 10, 11 auf- oder abtreibt. Am unteren Endbereich der Schwimmer ist jeweils ein Sensor 15 angeordnet, der mit der jeweils zugeordneten Signalleseantenne kommuniziert. Im Ergebnis muß die Füllstandshöhe ermittelt werden, die sich aus dem Abstand des Sensors 15 zum Behälterboden ermitteln läßt. Da die Position der insgesamt mit 20 bezeichneten Niveaumeßeinrichtung bekannt ist, in der sich die Schwimmer 12, 13, 14 bewegen, kann die Füllstandshöhe auch über den Abstand des Sensors 15 zum Boden der Vorrichtung, an der ein Reflektor 16 angeordnet ist, ermittelt werden. Der Abstand zwischen Sensor 15 und Reflektor 16 kann einmal durch eine direkte Messung des Abstandes zwischen Sensor 15 und der zugeordneten Signalleseantenne ermittelt werden. Alternativ kann dies auch mit einer Abstandsmessung zwischen Sensor 15 und Reflektor 16 erfolgen, wobei dieses Ergebnis dann vom Sensor 15 an die Signalleseantenne übermittelt wird. Hier könnte man von einer indirekten Messung sprechen. Derartige Messungen können hier im gezeigten Ausführungsbeispiel problemlos an den Flüssigkeitsbehälter 9 und 10 vorgenommen werden. Der Flüssigkeitsbehälter 11 soll einen Flüssigkeitsbehälter für Öl darstellen, der unterhalb des Motors angeordnet ist, so daß eine direkte Kommunikation zwischen dem Sensor 15 des Schwimmers 14 und der Signalleseantenne 8, die darüber angeordnet ist, nicht möglich ist. Um dieses Problem zu umgehen, ist im oberen Bereich des Motorraumes 3 eine dezentrale Energiespule 24, die mit der zentralen Energiespule 4 kommuniziert, und eine dezentrale Signallesenantenne 28 vorgesehen, die mit der Signalleseantenne 8 kommuniziert. Über eine Verbindung 29, die bevorzugt von einem Ölpeilstab gebildet ist, ist die dezentrale Spule 24 mit einer unterhalb des Motorraumes angeordneten dezentralen Spule 34 verbunden, über die die Energieübertragung zum Sensor 15 des Schwimmers 14 erfolgt. Ebenfalls ist dort im unteren Bereich des Motorraumes 3, also unterhalb des Motors, eine dezentrale Signalleseantenne 38 vorgesehen, die ebenfalls über die Verbindung 29 mit Signalleseantenne 28 verbunden ist. Das vom Sensor 15 des Schwimmers 14 ausgesandte Signal wird daher zunächst von der dezentralen Signalleseantenne 38 aufgenommen, über die Verbindung 29 an die dezentrale Signalleseantenne 28 gegeben und dort von der Signalleseantenne 8 ausgelesen und dann an das zentrale Lesegerät 5 weitergegeben.

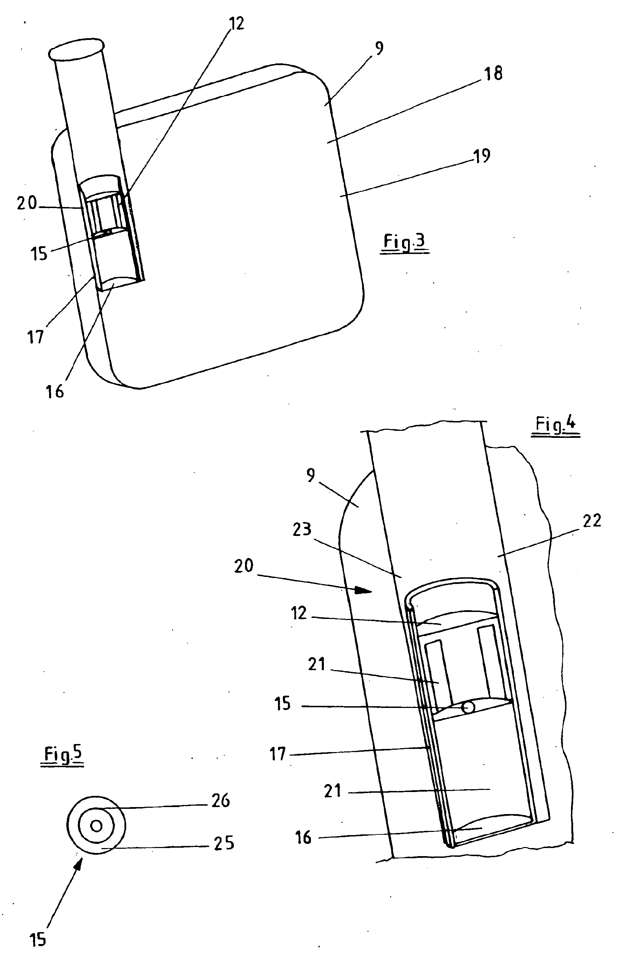

In Fig. 3 ist ein Flüssigkeitsbehälter 9 mit einer darin angeordneten Niveaumeßeinrichtung 20 dargestellt. Ein vergrößerter Ausschnitt der Niveaumeßeinrichtung 20 ist in Fig. 4 dargestellt. Der Flüssigkeitsbehälter 9 dient zur Aufnahme einer Flüssigkeit, beispielsweise von Wasser. Die Flüssigkeit sollte dabei zwischen einem unteren minimalen Niveau 19 und einem oberen maximalen Niveau 18 sein. Der Füllstand wird mit Hilfe der Niveaumeßeinrichtung 20 kontrolliert. Dazu weist die Niveaumeßeinrichtung 20 ein als rohrförmige Hülse ausgebildetes Gehäuse 17 auf, in der ein Schwimmer 12 angeordnet ist, der entsprechend dem Füllstand auf- und abgleitet. Im unteren Endbereich des Schwimmers 12 ist ein Sensor 15 angeordnet. Im unteren Endbereich des Gehäuses 17 ist ein Reflektor 16 angeordnet.

Wie in Fig. 4 deutlicher zu erkennen ist, kann eine Laufzeitmessung 21 zwischen dem Sensor 15 und dem Reflektor 16 ein Maß für den Abstand zwischen dem Sensor 15 und dem Reflektor 16 ergeben. Wie mit dem Pfeil 22 angedeutet ist, wird ein Signal h·f_{Lese}, das von der Energiespule 4 ausgeht, vom Sensor empfangen und entsprechend der durchgeführten Laufzeitmessung verändert als h·f_{Trans}, mit 23 bezeichnet, vom Sensor 15 abgegeben und von der Signalleseantenne aufgenommen. Alternativ oder zusätzlich kann auch der direkte Abstand zwischen dem Sensor 15 und der Signalleseantenne 6 gemessen werden. Der Schwimmer 12 der Niveaumeßeinrichtung 20 weist außerdem einen ringförmigen Metallmantel 27 auf.

In Fig. 5 ist ein Ultraschallsensor 15 in Mikrosystemtechnik zur Durchführung der Laufzeitmessung dargestellt. Ein äußerer Teil einer Membran, die ringartig ausgebildet ist, ist als Sender 25 ausgebildet, und ein innerer Teil einer Membran ist als Empfänger 26 ausgebildet.

## Patentansprüche

1. Vorrichtung zum Auslesen von Sensoren (15) in einem Kraftfahrzeug (1), wobei jedem Sensor (15) ein Transponder zugeordnet ist, das Kraftfahrzeug (1) eine zur Energieübertragung vorgesehene Spule (4) aufweist und das Kraftfahrzeug (1) für die auszulesenden Sensoren (15) mindestens eine Leseantenne (6, 7, 8) aufweist,
**dadurch gekennzeichnet,**
**daß** zum Auslesen der Sensoren (15) im Motorraum (3) des Kraftfahrzeuges (1) die zur Energieübertragung vorgesehene Spule (4) an der Motorhaube (2) des Kraftfahrzeuges (1) angeordnet ist und
**daß** die mindestens eine Leseantenne (6, 7, 8) für die auszulesenden Sensoren (15) an der Motorhaube (2) des Kraftfahrzeuges (1) angeordnet ist.

2. Vorrichtung nach Anspruch 1, **dadurch gekennzeichnet, daß** die zur Energieübertragung vorgesehene Spule (4) als separate Spule zusätzlich zu den Signalleseantennen (6,7, 8) ausgebildet ist.

3. Vorrichtung nach einem der vorhergehenden Ansprüche, **dadurch gekennzeichnet, daß** jedem Sensor (15) eine eigene Signalleseantenne (6, 7, 8) zugeordnet ist.

4. Vorrichtung nach einem der vorhergehenden Ansprüche, **dadurch gekennzeichnet, daß** die Leseantennen (6, 7, 8) als Spulen ausgebildet sind.

5. Vorrichtung nach einem der vorhergehenden Ansprüche, **dadurch gekennzeichnet, daß** die Leseantennen (6, 7, 8) jeweils direkt oberhalb des jeweils auszulesenden Sensors (15) angeordnet sind.

6. Vorrichtung nach einem der vorhergehenden Ansprüche, **dadurch gekennzeichnet, daß** die zur Energieübertragung vorgesehene Spule (4) in ihren Abmessungen an die Abmessungen des Motorraumes (3) angepaßt ist.

7. Vorrichtung nach einem der vorhergehenden Ansprüche, **dadurch gekennzeichnet, daß** die Leseantennen (6, 7, 8) innerhalb der zur Energieübertragung vorgesehenen Spule (4) angeordnet sind.

8. Vorrichtung nach einem der vorhergehenden Ansprüche, **dadurch gekennzeichnet, daß** in dem Kraftfahrzeug (1) ein zentrales Lesegerät (5) angeordnet ist, das mit der Spule zur Energieübertragung (4) und allen Leseantennen (6, 7, 8) verbunden ist.

9. Vorrichtung nach einem der vorhergehenden Ansprüche, **dadurch gekennzeichnet, daß** die Sensoren (15) an einem Schwimmer (12, 13, 14) angeordnet sind.

10. Vorrichtung nach einem der vorhergehenden Ansprüche, **dadurch gekennzeichnet, daß** ein Sensor (15) eine direkte Messung des Schwimmerstandes durchführt.

11. Vorrichtung nach einem der vorhergehenden Ansprüche, **dadurch gekennzeichnet, daß** ein Sensor (15) eine indirekte Messung des Schwimmerstandes durchführt.

12. Vorrichtung nach einem der vorhergehenden Ansprüche, **dadurch gekennzeichnet, daß** die Sensoren (15) eine Sendemembran (25) und eine Empfängermembran (26) aufweisen.

13. Vorrichtung nach einem der vorhergehenden Ansprüche, **dadurch gekennzeichnet, daß** das Sensorsignal hinsichtlich der Qualität des vom Sensorsignals erfaßten Mediums auswertbar ist.

14. Vorrichtung nach einem der vorhergehenden Ansprüche, **dadurch gekennzeichnet, daß** ein Sensor (15) als Ölsensor ausgebildet ist und daß dem Ölsensor eine Signalübertragungseinrichtung zugeordnet ist.

15. Vorrichtung nach Anspruch 14, **dadurch gekennzeichnet, daß** im Motorraum im Bereich der dem Ölsensor (15) zugeordneten, an der Motorhaube (3) angeordneten Leseantenne (8), eine Spule (24) und eine zweite Leseantenne (28) angeordnet sind und daß die Spule (24) mit einer zweiten Spule (34) im Bereich des Ölsensors verbunden ist.

16. Vorrichtung nach Anspruch 15, **dadurch gekennzeichnet, daß** die Verbindung zwischen der ersten Spule und der zweiten Spule über einen Ölpeilstab erfolgt.

## Claims

1. A device for reading sensors (15) in a motor vehicle (1), in which a transponder is associated with each sensor (15), the motor vehicle (1) has a coil (4) which is provided for the transfer of energy, and the motor vehicle (1) has at least one reading antenna (6,7,8) for the sensors (15) which are to be read,
**characterized in that**
to read the sensors (15) in the engine compartment (3) of the motor vehicle (1), the coil (4) which is provided for the transfer of energy is arranged on the engine hood (2) of the motor vehicle (1) and
the at least one reading antenna (6,7,8) for the sensors (15) which are to be read is arranged on the engine hood (2) of the motor vehicle (1).

2. The device according to Claim 1, **characterized in that** the coil (4) which is provided for the transfer of energy is constructed as a separate coil in addition to the signal-reading antennas (6,7,8).

3. The device according to any of the preceding claims, **characterized in that** each sensor (15) has its own signal-reading antenna (6, 7, 8) associated with it.

4. The device according to any of the preceding claims, **characterized in that** the reading antennas (6,7,8) are constructed as coils.

5. The device according to any of the preceding claims, **characterized in that** the reading antennas (6,7,8) are respectively arranged directly above the sensor (15) which is to be respectively read.

6. The device according to any of the preceding claims, **characterized in that** the coil (4) which is provided for the transfer of energy is adapted in its dimensions to the dimensions of the engine compartment (3).

7. The device according to any of the preceding claims, **characterized in that** the reading antennas (6,7,8) are arranged inside the coil (4) which is provided for the transfer of energy.

8. The device according to any of the preceding claims, **characterized in that** a central reading apparatus (5) is arranged in the motor vehicle (1), said central reading apparatus (5) being connected with the coil for the transfer of energy (4) and with all the reading antennas (6,7,8).

9. The device according to any of the preceding claims, **characterized in that** the sensors (15) are arranged on a float (12,13,14). '

10. The device according to any of the preceding claims, **characterized in that** a sensor (15) carries out a direct measurement of the float position.

11. The device according to any of the preceding claims, **characterized in that** a sensor (15) carries out an indirect measurement of the float position.

12. The device according to any of the preceding claims, **characterized in that** the sensors (15) have a transmitting membrane (25) and a receiving membrane (26).

13. The device according to any of the preceding claims, **characterized in that** the sensor signal is able to be evaluated in respect of the quality of the medium which is detected by the sensor signal.

14. The device according to any of the preceding claims, **characterized in that** a sensor (15) is constructed as an oil sensor and that a signal-transmission arrangement is associated with the oil sensor.

15. The device according to Claim 14, **characterized in that** a coil (24) and a second reading antenna (28) are arranged in the engine compartment in the region of the reading antenna (8) which is associated with the oil sensor (15) and is arranged on the motor hood (3), and that the coil (24) is connected with a second coil (34) in the region of the oil sensor.

16. The device according to Claim 15, **characterized in that** the connection between the first coil and the second coil takes place via an oil dipstick.

## Revendications

1. Dispositif de lecture de capteurs (15) dans un véhicule automobile (1), un transpondeur étant associé à chaque capteur (15), le véhicule automobile (1) comportant une bobine (14) prévue pour la transmission d'énergie et le véhicule automobile (1) comportant au moins une antenne de lecture (6, 7, 8) pour les capteurs (15) devant être lus, **caractérisé en ce que** pour la lecture des capteurs (15), dans le compartiment moteur (3) du véhicule automobile (1), la bobine (4) prévue pour la transmission d'énergie est disposée sur le capot moteur (2) du véhicule automobile (1) et
**en ce que** la au moins une antenne de lecture (6, 7, 8) pour les capteurs (15) devant être lus est disposée sur le capot moteur (2) du véhicule automobile (1).

2. Dispositif selon la revendication 1, **caractérisé en ce que** la bobine (4) prévue pour la transmission d'énergie est conçue sous la forme d'une bobine séparée, en supplément des antennes de lecture de signaux (6, 7, 8).

3. Dispositif selon l'une quelconque des revendications précédentes, **caractérisé en ce qu'**une propre antenne de lecture de signaux (6, 7, 8) est associée à chaque capteur (15).

4. Dispositif selon l'une quelconque des revendications précédentes, **caractérisé en ce que** les antennes de lecture de signaux (6, 7, 8) sont conçues sous la forme de bobines.

5. Dispositif selon l'une quelconque des revendications précédentes, **caractérisé en ce que** les antennes de lecture (6, 7, 8) sont disposées chacune directement au-dessus du capteur (15) qui doit respectivement être lu.

6. Dispositif selon l'une quelconque des revendications précédentes, **caractérisé en ce que** la bobine (4) prévue pour la transmission d'énergie est adaptée par ses dimensions aux dimensions du compartiment moteur (3).

7. Dispositif selon l'une quelconque des revendications précédentes, **caractérisé en ce que** les antennes de lecture (6, 7, 8) sont disposées à l'intérieur de la bobine (4) prévue pour la transmission d'énergie.

8. Dispositif selon l'une quelconque des revendications précédentes, **caractérisé en ce que** dans le véhicule automobile (1) est disposé un instrument de lecture (5) centralisé, qui est relié avec la bobine (4) pour la transmission d'énergie et avec toutes les antennes de lecture (6, 7, 8).

9. Dispositif selon l'une quelconque des revendications précédentes, **caractérisé en ce que** les capteurs (15) sont disposés sur un flotteur (12, 13, 14).

10. Dispositif selon l'une quelconque des revendications précédentes, **caractérisé en ce qu'**un capteur (15) procède à une mesure directe du niveau du flotteur.

11. Dispositif selon l'une quelconque des revendications précédentes, **caractérisé en ce qu'**un capteur (15) procède à une mesure indirecte du niveau du flotteur.

12. Dispositif selon l'une quelconque des revendications précédentes, **caractérisé en ce que** les capteurs (15) comportent une membrane émettrice (25) et une membrane réceptrice (26).

13. Dispositif selon l'une quelconque des revendications précédentes, **caractérisé en ce que** le signal du capteur est évaluable au niveau de la qualité du fluide détecté par le signal du capteur.

14. Dispositif selon l'une quelconque des revendications précédentes, **caractérisé en ce qu'**un capteur (15) est conçu sous la forme d'un capteur à huile et **en ce qu'**un dispositif de transmission de signaux est associé au capteur d'huile.

15. Dispositif selon la revendication 14, **caractérisé en ce que**, dans le compartiment moteur, dans la zone de l'antenne de lecture (8) associée au capteur d'huile (15), disposée sur le capot moteur (3) sont disposées une bobine (24) et une deuxième antenne de lecture (28) et **en ce que** dans la zone du capteur d'huile, la bobine (24) est reliée avec une deuxième bobine (34).

16. Dispositif selon la revendication 15, **caractérisé en ce que** la liaison entre la première bobine et la deuxième bobine est assurée au moyen d'une jauge d'huile.
